# FASCICULE DE BREVET EUROPEEN

(11) **EP 2 045 591 B1**
(45) Date de publication et mention de la délivrance du brevet: **14.12.2016**
(21) Numéro de dépôt: 08165702.5
(22) Date de dépôt: 02.10.2008
(51) Int. Cl.: G01M 11/06

(54) **Dispositif de contrôle des feux d'un vehicule**
Kontrollvorrichtung für Fahrzeugscheinwerfer
Vehicle light control device

(30) Priorité: 05.10.2007 FR 0706993
(43) Date de publication de la demande: 08.04.2009
(73) Titulaire: Capelec Sarl, 34000 Montpellier (FR)
(72) Inventeur: Viron, Benoit, F-38000, GRENOBLE (FR); Teboul, Mickael, F-34000, MONTPELLIER (FR); Coton, Michel, F-34130, SAINT AUNES (FR); Coton, Thierry, F-30000, NIMES (FR)
(74) Mandataire: Ipside

(56) Documents cités:
- FR-A- 2 580 399
- US-A- 4 435 078
- US-A- 5 164 785
- US-A- 5 485 265

## Description

La présente invention appartient au domaine des appareils de contrôle et de réglage des équipements lumineux des véhicules automobiles routiers.

Elle a pour objet un dispositif destiné à assister un opérateur lors du contrôle de l'orientation des phares d'un véhicule automobile et pour leur réglage adéquat par rapport aux normes en vigueur.

On sait que le mauvais réglage des phares est une cause non négligeable d'accidents de la route. Trop haut, ils éblouissent les autres usagers de la route ; trop bas, la visibilité s'en trouve considérablement réduite. C'est pourquoi, les véhicules en circulation sur le réseau routier, notamment français et européen, sont soumis à des obligations légales strictes en matière d'éclairage et de signalisation. Le réglage des feux doit permettre d'obtenir un éclairage suffisant sans éblouir les conducteurs des autres véhicules circulant sur la chaussée. La déviation verticale du faisceau est le critère géométrique essentiel de réglage. Le réglage latéral doit également être correctement effectué.

C'est pourquoi, lors du contrôle technique périodique et des réparations des équipements lumineux, notamment des feux de croisement mais aussi des feux de route et des feux antibrouillards, il est indispensable de contrôler l'orientation correcte du faisceau lumineux émis par le véhicule.

Les professionnels qui sont amenés à procéder très fréquemment au contrôle de la position des projecteurs des voitures et des camions, utilisent à l'heure actuelle des dispositifs optiques conçus pour simuler les conditions énoncées par les règlements. Il existe par exemple sur le marché des appareils appelés "régloscopes" ou "réglophares" qui sont placés devant le phare et projettent le faisceau lumineux émis à travers une lentille optique sur une surface perpendiculaire au sol. Le système optique est conçu pour fournir une image équivalente du phare à 10 mètres. L'opérateur peut ainsi repérer où se situe la limite de la zone éclairée par rapport à un niveau donné tout en manipulant le phare pour son réglage.

Les brevets US 4, 435,078 et US 5, 164,785 décrivent des exemples d'appareils conçus pour contrôler l'orientation d'un faisceau lumineux émis par un feu de véhicule.

Jusqu'à présent, en inspection périodique européenne des véhicules, le contrôle de l'éclairage se limitait à un contrôle du rabattement, celui-ci devant se trouver dans une plage donnée, par exemple pour les véhicules légers en France, entre -0,5% et -2,5%, soit une inclinaison vers le bas avec une pente comprise entre 5 cm et 25 cm pour 10 m.

Pour s'y conformer, il suffit de placer un écran comportant deux repères standards correspondant aux limites définies par la réglementation devant le projecteur et de vérifier la position de la limite ombre-lumière par rapport aux repères. Par exemple, certains régloscopes comportent un écran doté de cellules photosensibles placées aux limites autorisées. Le système détecte si la limite ombre-lumière du faisceau projeté est dans l'intervalle souhaité, auquel cas un voyant vert s'allume. Lorsque cette limite est au-dessus ou au-dessous de cet intervalle, un voyant rouge s'allume.

Cependant, désormais, on considère que le projecteur doit être orienté de sorte que le faisceau ait une hauteur nulle à une distance de 50 m devant le véhicule. Cette exigence est la base des normes légales en vigueur depuis septembre 2003 (voir la norme et la directive européenne 97/28/CE). L'angle d'inclinaison idéal du faisceau sera donc différent en fonction de la hauteur de la source lumineuse, ce qui implique qu'il faudra tenir compte du type de véhicule et de la position réelle de ses projecteurs par rapport au sol. Lors du contrôle, la tache de lumière projetée sur l'écran va donc se trouver à une hauteur déterminée mais variable selon la hauteur réelle du projecteur, elle-même étant fonction du modèle du véhicule et d'autres paramètres mécaniques tels que l'usure, le gonflage des pneus, la charge ...

Les systèmes de régloscopes utilisés jusqu'à présent, qui présentaient un avantage certain lorsqu'il n'y avait que deux niveaux limites de réglage, s'avèrent inadaptés à la nouvelle réglementation, car désormais l'opérateur doit s'assurer que le faisceau lumineux est effectivement orienté correctement. Or les systèmes qui tentent de répondre à la nouvelle réglementation sont des systèmes visuels (avec graduation sur l'écran de projection et mesure par l'opérateur) ou avec mesure d'angle dite manuelle (en utilisant une molette graduée de déviation de l'optique ou de déviation des cellules photosensibles, afin de déterminer la zone de changement ombre lumière). Ces deux méthodes reposent sur la mobilité relative des organes optiques et récepteurs, et nécessitent l'intervention de l'opérateur, ce qui crée une incertitude sur le résultat de la mesure du fait notamment des multiples erreurs humaines susceptibles de se produire.

En outre, lorsque les données constructeur quant à la hauteur des projecteurs font défaut, il est indispensable pour déterminer quelle est la valeur optimale de rabattement à obtenir, de réaliser un calcul en prenant en compte la hauteur du projecteur par rapport au sol. Les régloscopes actuellement disponibles sur le marché n'apportent aucune aide sur ce point à l'opérateur.

Il est par ailleurs connu d'utiliser un procédé dans lequel une caméra fait l'acquisition de l'image homothétique à celle formée sur un écran placé à 10 mètres. Cette image fait ensuite l'objet d'un traitement pour calculer la déviation du faisceau. Cette solution techniquement performante, développée pour les constructeurs automobiles, est toutefois très onéreuse. Elle nécessite en outre des moyens de calcul importants et la connexion du système à un ordinateur. Elle est donc réalisable et économiquement justifiée pour effectuer des réglages en grand nombre sur une chaîne de fabrication. Pour ces mêmes raisons, elle est mal adaptée au contrôle périodique et à la réparation en atelier.

Il existe donc un besoin, en particulier pour les centres de contrôle technique et pour les professionnels de la réparation et de l'entretien automobile, de disposer d'un système de contrôle et d'aide au réglage de l'orientation des feux des projecteurs automobiles simple, rapide et objective, et qui permette notamment d'effectuer la mesure quantitative de l'angle de rabattement de manière fiable. Il est aussi souhaitable qu'un tel système soit adapté économiquement et ergonomiquement, et hautement automatisable.

Il est en outre recommandé de contrôler la puissance du faisceau lumineux émis par le véhicule. Il est connu que le rendement lumineux des ampoules utilisées peut diminuer dans le temps, jusqu'à des niveaux qui peuvent s'avérer insuffisants. Sur certains modèles, l'intensité diminue de 50% en cinq ans. Il est utile de vérifier ce paramètre afin de remplacer les ampoules en temps voulu.

La présente invention a pour but de répondre à ces besoins en proposant un dispositif de contrôle de l'orientation des projecteurs par mesure du rabattement du faisceau lumineux émis, c'est-à-dire de l'angle correspondant à la déviation du faisceau par rapport au plan de la chaussée. L'invention a aussi pour but de proposer un dispositif universel, c'est-à-dire apte à réaliser la mesure du rabattement du faisceau lumineux pour tout type de véhicule, sans avoir à en modifier les réglages et le paramétrage. Un autre but de l'invention est de réaliser en une seule opération le contrôle vertical et horizontal du projecteur. Un autre but de l'invention est de disposer d'un outil de détection de la limite de la zone éclairée basé sur une mesure d'intensité lumineuse. Un autre but de l'invention est de disposer d'une méthode sensible, précise et fournissant un résultat chiffré, répondant à coup sûr aux normes qualitatives et quantitatives en vigueur. Encore un autre but de l'invention est de réaliser avec un seul appareil le contrôle de tous les projecteurs du véhicule. Un objectif de l'invention est encore de pouvoir effectuer le contrôle et le réglage à l'aide du même appareil, celui-ci pouvant apporter une assistance automatisée. Un autre but de l'invention est de réaliser également le contrôle de l'intensité lumineuse du projecteur. Un autre but de l'invention est de proposer un système automatisé, dans lequel notamment l'opérateur est dispensé de rechercher les données techniques relatives à la hauteur des projecteurs du véhicule préalablement au réglage. Un autre but de l'invention est de disposer d'un système mobile et fonctionnant de manière autonome.

Dans la présente demande, les termes "projecteurs", "feux" sont des synonymes désignant ensemble tous les moyens d'éclairage pouvant équiper un véhicule automobile ou l'un quelconque d'entre eux, et notamment les feux de route (souvent appelés phares), les feux de croisement (souvent appelés codes) ou les feux antibrouillards. Ces termes peuvent être employés indifféremment, étant entendu que le critère déterminant est la position de la source et l'orientation du faisceau lumineux. En pratique, ce sont les feux de croisement (codes) qui sont inclinés vers le bas, les feux de route (phares) devant être orientés afin d'éclairer le plus loin possible.

Les véhicules concernés sont en principe des véhicules automobiles routiers, tels que les voitures de loisir, les camions, camionnettes, et engins mobiles de tout type, mais il est bien entendu que le dispositif objet de la présente invention peut trouver d'autres applications pour lesquelles les mêmes fonctions sont requises.

Le terme "rabattement" s'applique à la valeur de l'inclinaison verticale du faisceau lumineux par rapport à un axe parallèle à la surface du sol sur lequel repose le véhicule, assimilé à un axe horizontal. La valeur de rabattement de référence est l'inclinaison idéale théorique du faisceau lumineux, émis par une source placée à une hauteur donnée.

Ainsi, la présente invention a pour objet un appareil de contrôle et de réglage de phares avec mesure de l'angle de rabattement. Plus précisément, elle a pour objet un dispositif de contrôle de l'orientation d'un faisceau lumineux émis par un projecteur monté fixe pivotant sur un châssis en appui sur le sol, du type comportant un boîtier de mesure monté sur un support réglable en hauteur, dans lequel le boîtier comprend un système optique apte à transposer le faisceau émis par le projecteur en un faisceau équivalent à 10 mètres et à le projeter sur une platine sensiblement verticale placée dans le boîtier, ladite platine supportant au moins une série linéaire de cellules photosensibles disposées à différentes hauteurs dans le plan de la platine et reliées à des moyens de traitement du signal.

Le boîtier et le système optique peuvent être similaires à ceux des modèles de régloscopes déjà utilisés ou différents. De manière connue, le système optique comprend essentiellement une lentille placée de telle sorte qu'elle focalise la lumière du faisceau lumineux en une tache concentrée projetée sur le fond du boîtier. Les caractéristiques physiques et géométriques de cet ensemble sont telles que le faisceau projetée est équivalent à celui qui serait perçu à 10 mètres en conditions naturelles. Tout autre dispositif réalisant les fonctions précitées peut être utilisé.

Une platine est placée au fond du boîtier, commodément en position sensiblement verticale, de sorte qu'elle reçoit le faisceau lumineux transposé. Selon l'invention, cette platine comprend une ou plusieurs séries linéaires de cellules photosensibles, qui vont donc être, selon leur position, éclairées ou non par ledit faisceau. Celles qui seront dans la zone éclairée généreront un signal qui sera transmis aux moyens de traitement du signal, repérant ainsi la limite lumière-ombre créée par le faisceau. On réalise ainsi une mesure de l'angle formé par le faisceau par rapport à l'horizontale.

Une série linéaire de cellules photosensibles comprend une pluralité de cellules disposées de manière rectiligne. Une autre disposition est possible, mais complique le traitement ultérieur des signaux. Une série doit contenir un certain nombre de cellules, en principe au minimum trois, mais il est recommandé d'en associer au moins cinq pour obtenir un résultat exploitable en pratique. La distance séparant les cellules détermine la précision de la mesure. Une série constitue une barrette qui sera fixée à la platine de manière à concorder avec les valeur d'inclinaison qui doivent être repérées. Par exemple, on peut ajuster chaque barrette pour couvrir une plage de valeurs comprises entre +2% et -5% d'inclinaison verticale.

Les cellules photosensibles sont avantageusement des photodiodes, bien que d'autres capteurs pourraient être utilisés. Les photodiodes sont des cellules photosensibles de type connu, qui par rapport à d'autres types de cellules, présentent l'intérêt d'avoir des dimensions très petites afin de pouvoir les disposer au plus près les unes des autres.

Selon une caractéristique préférée du dispositif selon l'invention, la platine supporte au moins une série linéaire verticale continue de cellules photosensibles. On obtient ainsi un niveau de précision de la mesure excellent.

De manière avantageuse, la platine supporte au moins deux séries linéaires continues de cellules photosensibles, chaque série étant disposée en une colonne verticale, les cellules photosensibles de chaque série étant décalées selon un axe vertical par rapport à celles de des autres séries. Une telle disposition permet d'obtenir une mesure plus précise, en combinant les signaux issus des deux ou de plusieurs séries parallèles décalées.

Par exemple, si deux colonnes sont composées de cellules photoélectriques qui sont placées à une distance les unes des autres correspondant à 0,50% de rabattement, du fait du décalage, leur centre présente un écart correspondant à 0,25% de rabattement du faisceau lumineux. En réalité, lorsque la coupure ombre-lumière se trouve entre deux cellules, une extrapolation permet de déterminer sa position (et donc le rabattement) avec une précision de l'ordre de 1% ici, mais qui peut être bien meilleure dans certains modes de réalisation. Ceci constitue un avantage considérable, puisque une telle précision n'a jamais été obtenue et sera exigée par les normes européennes à partir de 2010.

Selon une variante avantageuse, les moyens de traitement du signal généré par les cellules photoélectriques comprennent des moyens de calcul fournissant une valeur quantitative de l'inclinaison verticale du faisceau lumineux. Par exemple, on peut utiliser des moyens de traitement du signal et d'affichage intégrés au dispositif, associés à des moyens de calcul conçus pour exploiter les niveaux électriques de l'ensemble des cellules photosensibles et déterminer la valeur de l'inclinaison verticale du faisceau lumineux. Cet aspect constitue également une avancée importante pour les opérateurs, car ils disposent désormais, non pas d'une simple indication de validité du réglage (bon ou mauvais), mais de la valeur chiffrée de l'inclinaison du projecteur du véhicule concerné.

Pour obtenir une valeur de rabattement qui corresponde au niveau zéro à 50 mètres, il est indispensable de tenir compte de la hauteur de la source lumineuse, c'est-à-dire de la configuration et de la hauteur du châssis portant la lanterne émettrice. C'est pourquoi, selon un mode de réalisation intéressant de l'invention, le dispositif comprend des moyens de détermination de la hauteur du projecteur par rapport au sol.

Pour ce faire, le dispositif peut comprendre un capteur infrarouge pointant vers le sol, fixé au boîtier de mesure, apte à réaliser une mesure de la hauteur du projecteur par rapport au sol, associé à des moyens de calcul de la valeur de rabattement de référence.

Si par ailleurs le dispositif comprend des moyens d'aide au positionnement du système optique dans l'axe du projecteur, il est avantageux de les coupler avec les moyens de détermination de la hauteur du projecteur par rapport au sol. Ce couplage repose alors sur le fait que la détermination de la hauteur ne peut être effectuée que si le positionnement du système optique a été préalablement validé.

Le dispositif peut commodément se voir associer également une base de données comportant les caractéristiques géométriques du châssis des différents modèles de véhicules en circulation, notamment la hauteur des projecteurs, ces données étant généralement fournies par le constructeur.

En outre, le dispositif peut avantageusement comprendre une base de données contenant une valeur de rabattement de référence par modèle de véhicule. Par exemple, la valeur de rabattement théorique fournie par les constructeurs peut être préenregistrée d'une base de données associée au dispositif, et extraite à volonté.

De préférence, le dispositif objet de la présente invention comprend des moyens d'affichage de la valeur d'inclinaison mesurée, et de préférence aussi de ladite valeur de rabattement de référence, qu'elle soit extraite d'une base de donnée, calculée ou mesurée sur place.

Dans un mode de réalisation particulièrement intéressant, le dispositif selon l'invention, comprend également :
- des moyens de mesure de l'intensité lumineuse du faisceau ;
- des moyens de détection du déréglage horizontal du faisceau lumineux.

Ces fonctions sont déjà présentes dans certains des dispositifs existants. Des photodiodes judicieusement placées sur la platine permettent d'effectuer un réglage latéral des feux de croisement et des feux de route. D'autres photodiodes permettent de mesurer l'intensité lumineuse en certains points caractéristiques des faisceaux code et route.

De manière avantageuse, le dispositif selon l'invention comprend en outre une unité centrale de gestion du système, de préférence intégrée, et un ou plusieurs des moyens suivants :
- des moyens d'échange de données avec ladite unité centrale ;
- une interface utilisateur (clavier, afficheur) ;
- des moyens de stockage et d'impression des résultats de mesures ;
- des moyens d'alimentation autonomes.

Ces éléments peuvent être conçus sans difficulté particulière par un bureau d'étude, à partir du cahier des charges. Ils permettent une expression quantitative des mesures, une édition automatique des résultats et une conservation en mémoire. Les moyens d'acquisition et de transmission des données échangées avec une unité centrale peuvent être réalisés avec ou sans liaison physique (par exemple avec une liaison RS232, wifi ou bluetooth).

Comme on le comprend aisément, il est possible d'automatiser et d'intégrer de manière très poussée les différentes fonctions découlant du présent dispositif, pour le rendre indépendant : nul besoin de manipuler ou déplacer les organes, nul besoin d'un raccordement à un ordinateur annexe.

La présente invention sera mieux comprise, et des détails en relevant apparaîtront, à la lumière de la description qui va en être faite, avec différentes variantes de réalisation, et en relation avec les figures des planches annexées, dans lesquelles :
- la figure 1 est une représentation schématique du dispositif de réglage des projecteurs selon l'invention.
- la figure 2 est une vue schématique de la platine comportant différentes cellules photoélectriques.

### EXEMPLE 1 : Descriptif général

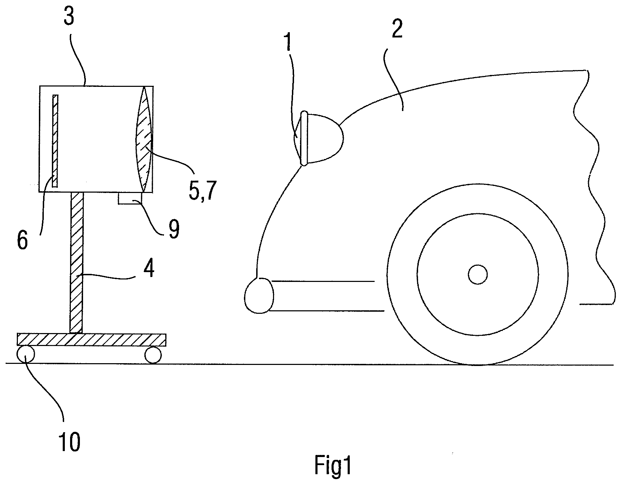

Conformément à la figure 1, un faisceau lumineux est émis par le projecteur 1 monté fixe pivotant sur un châssis 2 en appui sur le sol. Le dispositif de contrôle de l'orientation comporte le boîtier de mesure 3 monté sur le support 4 réglable en hauteur. Le boîtier 3 comprend le système optique 5, comportant la lentille 7, apte à transposer le faisceau émis par le projecteur 1 en un faisceau équivalent à 10 mètres et à le projeter sur la platine 6 verticale placée dans le fond du boîtier 3. La platine 6 supporte des photodiodes disposées à différentes hauteurs dans le plan de la platine. Les photodiodes sont reliées à des moyens de traitement du signal (non représentés).

Le déplacement horizontal de l'appareil se fait par des roues 10 au sol (un rail de guidage est aussi envisageable). Le boîtier de mesure 3 est guidé sur colonne afin de permettre son positionnement vertical. L'appareil peut ainsi s'adapter à tout type de phare dont le centre optique est situé à une hauteur de 250 mm à 1200 mm au dessus du sol.

Un système d'aide au positionnement de l'appareil en face du projecteur 1 est réalisé par un cadre contenant quatre photodiodes 8 placées autour de la lentille 7 et connectées au système de traitement électronique de l'appareil. Des flèches (haut, bas, droite et gauche) s'affichent sur l'écran pour aider au bon positionnement du boîtier devant le projecteur.

Le dispositif ici décrit dispose d'une interface LCD (affichage à cristaux liquides ACL ou liquid crystal display LCD) pour le paramétrage et l'affichage des résultats de mesures. Deux modes de fonctionnement sont possibles, qui permettent de présélectionner certains groupes de fonctions, l'un adapté au simple contrôle technique (mode Contrôle) et l'autre destiné au réglage par le garagiste (mode Réglage). Le choix du mode se fait par les menus de l'interface LCD.

Au choix de l'utilisateur, le dispositif peut fonctionner sur piles standards ou rechargeables. Un chargeur peut y être connecté afin de recharger les batteries sans avoir à les enlever. Une mise en veille automatique de l'appareil au bout d'un temps défini permet d'augmenter la durée de vie des piles.

### EXEMPLE 2 : Descriptif du système optoélectronique

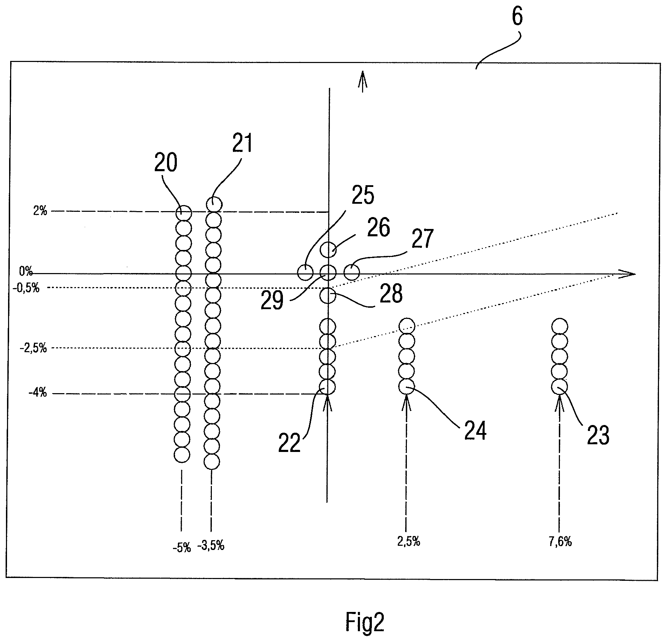

Sur la figure 2, la platine 6 supporte plusieurs séries de photodiodes, destinées au contrôle du rabattement des feux de croisement et antibrouillards, ainsi qu'au réglage des feux de route, horizontalement comme verticalement, et à la mesure de l'intensité lumineuse.

### 2.a - Rabattement des feux de croisement

La platine comporte d'abord une barrette de deux séries linéaires continues de photodiodes 10, 11, disposées en deux colonnes verticales parallèles, placées de sorte à permettre la mesure du rabattement de +2% à -4%. La barrette de photodiodes est constituée au total de 35 photodiodes (17 sur la colonne de droite et 18 sur celle de gauche). Sur une même colonne, les photodiodes sont placées tous les 0,5% ;

Les photodiodes d'une série sont décalées de la valeur d'une demi-diode selon un axe vertical par rapport à celles de l'autre série, soit de 0,25%. Ceci permet d'avoir une résolution théorique de 0,25% sur la mesure de rabattement. En réalité, il est possible de déterminer par extrapolation sa position de la coupure ombre/lumière avec une précision de 0,1%, bien supérieure donc à la précision théorique, comme expliqué ci-après.

### Méthode de mesure du rabattement

Chaque photodiode donne un signal électrique au système de traitement proportionnel à la lumière à laquelle elle est exposée. Ainsi, les photodiodes situées dans la zone éclairée par le projecteur fournissent un signal électrique plus élevé que les photodiodes qui se trouvent dans la zone d'ombre. A partir de l'ensemble des signaux électriques des photodiodes de la (ou des) barrettes, il est possible en calculant le différentiel entre chaque photodiode, de déterminer la position de l'intersection entre zone d'ombre et zone de lumière. Du fait que cette zone de transition n'est pas nette, mais plutôt progressive, la comparaison ne se fait pas entre deux photodiodes consécutives, mais entre deux photodiodes situées à une distance X l'une de l'autre, X étant judicieusement choisie.

Le rabattement se mesure en déterminant la position des deux photodiodes distantes entre elles de X mm et dont les signaux électriques répondent à des critères prédéfinis de variation du signal électrique, ces critères déterminant que l'une est dans la zone illuminée et l'autre dans la zone d'ombre. Connaissant enfin les positions mécaniques de chaque photodiode, il est facile de déduire un angle de rabattement équivalent. Il est ensuite possible, à partir des grandeurs électriques produites par chacune des photodiodes, d'établir une position barycentrique intermédiaire de la position exacte d'intersection ombre/lumière, ce qui permet d'obtenir une précision supérieure à la précision théorique découlant directement de la distance entre deux photodiodes.

### 2.b - Orientation latérale des feux de croisement

La platine comporte aussi des composants destinés aux autres réglages des feux d'un véhicule.

Pour le réglage latéral des codes, on détecte le "hot spot" (le point brillant) du faisceau code. Pour cela, deux séries de photodiodes (22, 23) sont placées dans le cadran inférieur droit de la platine 6, puisque les codes doivent être légèrement orientés vers le bas-côté de la route, toujours pour éviter l'éblouissement des conducteurs venant en face. Une troisième série 24 de photodiodes placée entre les deux premières permet quand à elle, de mesurer l'intensité lumineuse du faisceau code. Ces trois séries sont constituées de photodiodes mises en parallèle à une hauteur telle que le réglage latéral des codes soit possible pour un rabattement compris entre -0,5% et -2,5%, et dans le cas d'espèce couvrant une inclinaison allant de -1,75% à -3,75%.

### 2.c - Orientation des feux de route

Ces optiques sont supposés éclairer à l'infini, c'est-à-dire horizontalement et parallèlement à la chaussée. Les capteurs correspondants sont donc placés au centre de la platine 6. Quatre photodiodes 25, 26, 27 et 28 placées selon quatre directions différentes par rapport au centre, permettent le réglage vertical et latéral des feux de route. Une cinquième photodiode 29 placée au centre, permet de mesurer l'intensité lumineuse du faisceau route dans l'axe du véhicule.

### EXEMPLE 3 : Fonctionnement du régloscope

Selon que le régloscope est utilisé pour le contrôle technique des véhicules, ou pour le réglage des feux chez le garagiste, les fonctions mises en oeuvre sont différentes. En effet, le contrôle conduit à réaliser une vérification de l'état du véhicule et à en rendre compte sans intervenir sur cet état, alors que le réglage, effectué généralement par un mécanicien le conduit à intervenir pour modifier l'état du véhicule, dans une mesure qu'il doit pouvoir apprécier tout en manipulant.

C'est pourquoi, de manière pratique, plusieurs modes de fonctionnement du régloscope selon l'invention sont prévus (Contrôle et Réglage). Le menu principal de l'appareil donne accès au menu de configuration, ainsi qu'aux fonctions "Contrôle technique", "Réglage codes", "Réglage route", "Réglage anti-brouillard". Dans tous les cas les valeurs mesurées sont affichées sur un écran de contrôle, visible par l'opérateur.

### 1) - Le mode "Contrôle" permet :

- Le choix du type de véhicule contrôlé (ou de la hauteur des phares correspondante) dans une base de données préenregistrée, afin de déterminer la validité du réglage du phare par comparaison instantanée avec la valeur observée lors du contrôle.
- Une mesure de l'angle de rabattement de +2 à -4% avec une précision de +/- 0,1% et affichage sur écran LCD.
- Une mesure de l'intensité lumineuse des phares, avec affichage sur écran.
- L'envoi de la valeur du rabattement mesuré en mémoire et/ou sur une imprimante au choix de l'utilisateur.
- Le contrôle du rabattement des feux antibrouillards.

### 2) - Le mode "Réglage" permet :

- Le réglage des feux de code de -0.5% à -2.5%, par affichage sur écran LCD de flèches pour le réglage horizontal (droite ou gauche) et de la valeur du rabattement pour le réglage vertical.
- Le réglage des feux de route par affichage sur écran LCD de flèches pour le réglage horizontal (droite ou gauche) et pour le réglage vertical (haut ou bas).
- Le réglage des feux anti-brouillard par affichage du rabattement sur écran LCD.

## Revendications

1. Dispositif de contrôle de l'orientation d'un faisceau lumineux émis par un projecteur (1) monté fixe pivotant sur un châssis (2) en appui sur le sol, du type comportant un boîtier de mesure (3) monté sur un support (4) réglable en hauteur, **caractérisé en ce que** ledit boîtier comprend :
- un système optique (5) apte à transposer le faisceau émis par ledit projecteur en un faisceau équivalent à 10 mètres et à le projeter sur une platine (6) sensiblement verticale placée dans le fond dudit boîtier pour recevoir directement le faisceau équivalent, ladite platine supportant au moins une série linéaire de cellules photosensibles disposées à différentes hauteurs dans le plan de ladite platine et arrangées de sorte à permettre une mesure quantitative d'un angle de rabattement du faisceau émis, c'est-à-dire un angle formé par le faisceau par rapport à l'horizontale, lesdites cellules photosensibles générant un signal lorsqu'elles sont éclairées par ledit faisceau, lesdites cellulles photosensibles étant reliées à des moyens de traitement du signal, lesdits moyens de traitement du signal fournissant une mesure quantitative de l'angle de rabattement à partir de la position d'une limite lumière-ombre créée par le faisceau, ladite position étant déterminée à partir des cellules photosensibles éclairées par le faisceau et des positions des cellules photosensibles.

2. Dispositif selon la revendication 1, **caractérisé en ce que** lesdites cellules photosensibles sont des photodiodes.

3. Dispositif selon la revendication 1 ou 2, **caractérisé en ce que** la platine (6) supporte au moins une série linéaire verticale continue de cellules photosensibles.

4. Dispositif selon l'une des revendications précédentes, **caractérisé en ce que** la platine (6) supporte au moins deux séries linéaires continues de cellules photosensibles, chaque série étant disposée en une colonne verticale, les cellules photosensibles de chaque série étant décalées selon un axe vertical par rapport à celles des autres séries.

5. Dispositif selon l'une des revendications précédentes, **caractérisé en ce que** les moyens de traitement du signal généré par les cellules photoélectriques comprennent des moyens de calcul fournissant une valeur quantitative de l'inclinaison verticale du faisceau lumineux.

6. Dispositif selon l'une quelconque des revendications précédentes, caractérisé en ce qu'il comprend des moyens de détermination de la hauteur du projecteur par rapport au sol.

7. Dispositif selon la revendication précédente, caractérisé en ce qu'il comprend un capteur infrarouge (9) pointant vers le sol, fixé au boîtier de mesure (3), apte à réaliser une mesure de la hauteur du projecteur par rapport au sol, associé à des moyens de calcul de la valeur de rabattement de référence.

8. Dispositif selon l'une quelconque des revendications précédentes, caractérisé en ce qu'il comprend une base de données contenant les caractéristiques géométriques du châssis des différents modèles de véhicules en circulation, ou une valeur de rabattement de référence par modèle de véhicule.

9. Dispositif selon l'une des revendications 6 ou 7, caractérisé en ce qu'il comprend des moyens d'affichage de la valeur d'inclinaison mesurée, et de préférence aussi de ladite valeur de rabattement de référence.

10. Dispositif selon l'une quelconque des revendications précédentes, caractérisé en ce qu'il comprend en outre :
- des moyens de mesure de l'intensité lumineuse du faisceau ;
- des moyens de détection du déréglage horizontal du faisceau lumineux.

11. Dispositif selon l'une quelconque des revendications précédentes, caractérisé en ce qu'il comprend en outre une unité centrale de gestion du système et un ou plusieurs des moyens suivants :
- des moyens d'échange de données avec ladite unité centrale,
- une interface utilisateur ;
- des moyens de stockage et d'impression des résultats de mesures ;
- des moyens d'alimentation autonomes.

## Patentansprüche

1. Vorrichtung zum Steuern der Orientierung eines Lichtstrahlenbündels, das von einem Projektor (1) ausgesendet wird, der an einem Rahmen (2), der sich auf dem Boden abstützt, drehbar fest montiert ist, des Typs, der ein Messgehäuse (3) aufweist, das an einem höheneinstellbaren Träger (4) montiert ist, **dadurch gekennzeichnet, dass** das Gehäuse Folgendes umfasst:
- ein optisches System (5), der das durch den Projektor ausgesendete Strahlenbündel in ein äquivalentes Strahlenbündel mit 10 Metern umwandeln kann und es auf eine im Wesentlichen vertikale Platine (6), die auf dem Boden des Gehäuses angeordnet ist, um das äquivalente Strahlenbündel direkt zu empfangen, projizieren kann, wobei die Platine wenigstens eine geradlinige Reihe lichtempfindlicher Zellen trägt, die auf unterschiedlichen Höhen in der Ebene der Platine angeordnet sind und in der Weise ausgerichtet sind, dass eine quantitative Messung eines Ablenkwinkels des ausgesendeten Strahlenbündels, d. h. eines Winkels, der durch das Strahlenbündel in Bezug auf die Horizontale gebildet wird, möglich ist, wobei die lichtempfindlichen Zellen ein Signal erzeugen, wenn sie durch das Strahlenbündel beleuchtet werden, wobei die lichtempfindlichen Zellen mit Signalverarbeitungsmitteln verbunden sind, wobei die Signalverarbeitungsmittel eine quantitative Messung des Ablenkwinkels anhand der Position einer durch das Strahlenbündel erzeugten Licht-Schatten-Grenze liefern, wobei die Position anhand von lichtempfindlichen Zellen, die durch das Strahlenbündel beleuchtet werden, und der Positionen der lichtempfindlichen Zellen bestimmt wird.

2. Vorrichtung nach Anspruch 1, **dadurch gekennzeichnet, dass** die lichtempfindlichen Zellen Photodioden sind.

3. Vorrichtung nach Anspruch 1 oder 2, **dadurch gekennzeichnet, dass** die Platine (6) wenigstens eine ununterbrochene, vertikale, gerade Reihe lichtempfindlicher Zellen trägt.

4. Vorrichtung nach einem der vorhergehenden Ansprüche, **dadurch gekennzeichnet, dass** die Platine (6) wenigstens zwei ununterbrochene, gerade Reihen lichtempfindlicher Zellen trägt, wobei jede Reihe in einer vertikalen Spalte angeordnet ist, wobei die lichtempfindlichen Zellen jeder Reihe längs einer vertikalen Achse in Bezug auf jene der anderen Reihe versetzt sind.

5. Vorrichtung nach einem der vorhergehenden Ansprüche, **dadurch gekennzeichnet, dass** die Mittel zur Verarbeitung des Signals, das durch die lichtempfindlichen Zellen erzeugt wird, Rechenmittel umfassen, die einen quantitativen Wert der vertikalen Neigung des Lichtstrahlenbündels liefern.

6. Vorrichtung nach einem der vorhergehenden Ansprüche, **dadurch gekennzeichnet, dass** sie Mittel zum Bestimmen der Höhe des Projektors in Bezug auf den Boden umfasst.

7. Vorrichtung nach dem vorhergehenden Anspruch, **dadurch gekennzeichnet, dass** sie einen Infrarotempfänger (9), der zum Boden zeigt und an dem Messgehäuse (3) befestigt ist, umfasst, der eine Messung der Höhe des Projektors in Bezug auf den Boden ausführen kann und Mitteln zum Berechnen des Referenzablenkwerts zugeordnet ist.

8. Vorrichtung nach einem der vorhergehenden Ansprüche, **dadurch gekennzeichnet, dass** sie eine Datenbank umfasst, die die geometrischen Eigenschaften des Chassis verschiedener am Verkehr teilnehmender Fahrzeuge oder einen Referenzablenkwert pro Fahrzeugmodell enthält.

9. Vorrichtung nach einem der Ansprüche 6 oder 7, **dadurch gekennzeichnet, dass** sie Mittel zum Anzeigen des gemessenen Neigungswerts und vorzugsweise auch des Referenzablenkwerts umfasst.

10. Vorrichtung nach einem der vorhergehenden Ansprüche, **dadurch gekennzeichnet, dass** sie außerdem Folgendes umfasst:
- Mittel zum Messen der Lichtstärke des Strahlenbündels;
- Mittel zum Detektieren der horizontalen Fehljustierung des Lichtstrahlenbündels.

11. Vorrichtung nach einem der vorhergehenden Ansprüche, **dadurch gekennzeichnet, dass** sie außerdem eine Zentraleinheit für das System und eines oder mehrere der folgenden Mittel umfasst:
- Mittel zum Austauschen von Daten mit der Zentraleinheit,
- eine Anwenderschnittstelle;
- Mittel zum Speichern und Drucken der Messergebnisse;
- autonome Versorgungsmittel.

## Claims

1. Device for controlling the orientation of a light beam emitted by a pivoting headlamp (1) permanently mounted on a chassis (2) resting on the ground, of the type comprising a measurement device housing (3) mounted on a stand (4) of adjustable height, **characterized in that** said housing comprise:
- an optical system (5) able to convert the beam emitted by said headlamp into a beam that is the equivalent at 10 metres and to project said beam onto a substantially vertical platen (6) placed at the back of said housing in order to directly receive the equivalent beam, said platen bearing at least one linear array of photosensitive cells placed at various heights in the plane of said platen and arranged so as to allow a quantitative measurement of a tilt angle of the emitted beam, i.e. an angle formed by the beam with respect to the horizontal, said photosensitive cells generating a signal when they are illuminated by said beam, said photosensitive cells being connected to means for processing the signal, said means for processing the signal delivering a quantitative measurement of the tilt angle on the basis of the position of a light-shadow cut-off created by the beam, said position being determined from the photosensitive cells illuminated by the beam and the positions of the photosensitive cells.

2. Device according to Claim 1, **characterized in that** said photosensitive cells are photodiodes.

3. Device according to Claim 1 or 2, **characterized in that** the platen (6) holds at least one continuous vertical linear array of photosensitive cells.

4. Device according to one of the preceding claims, **characterized in that** the platen (6) holds at least two continuous linear arrays of photosensitive cells, each array being placed in a vertical column, the photosensitive cells of each array being shifted along a vertical axis with respect to those of the other array.

5. Device according to one of the preceding claims, **characterized in that** the means for processing the signal generated by the photoelectric cells comprise computational means delivering a quantitative value of the vertical inclination of the light beam.

6. Device according to any one of the preceding claims, **characterized in that** it comprises means for determining the height of the headlamp with respect to the ground.

7. Device according to the preceding claim, **characterized in that** it comprises an infrared sensor (9) pointing towards the ground, which sensor is fastened to the measurement device housing (3), able to measure the height of the headlamp with respect to the ground and associated with means for computing the reference tilt value.

8. Device according to any one of the preceding claims, **characterized in that** it comprises a database containing the geometric characteristics of the chassis of various vehicle models in use, or one reference tilt value per vehicle model.

9. Device according to either of Claims 6 and 7, **characterized in that** it comprises means for displaying the measured inclination value, and preferably also said reference tilt value.

10. Device according to any one of the preceding claims, **characterized in that** it furthermore comprises:
- means for measuring the light intensity of the beam;
- means for detecting any horizontal misalignment of the light beam.

11. Device according to any one of the preceding claims, **characterized in that** it furthermore comprises a central unit for managing the system and one or more of the following means:
- means for exchanging data with said central unit;
- a user interface;
- means for storing and printing the results of measurements;
- autonomous power-supplying means.
